# EUROPÄISCHE PATENTSCHRIFT

(11) **EP 0 520 083 B1**
(45) Veröffentlichungstag und Bekanntmachung des Hinweises auf die Patenterteilung: **21.02.1996**
(21) Anmeldenummer: 91110803.3
(22) Anmeldetag: 28.06.1991
(51) Int. Cl.: H04Q 11/04, H04Q 3/545

(54) **Datenkonsistenzsicherung in einem digitalen Fernmeldevermittlungssystem**
Consistency protection of data in a digital telecommunications exchange system
Protection de la consistance des données dans un système de télécommunications numériques

(43) Veröffentlichungstag der Anmeldung: 30.12.1992
(73) Patentinhaber: SIEMENS AKTIENGESELLSCHAFT, D-80333 München (DE)
(72) Erfinder: Wöss, Friedrich, Dipl.-Ing., W-8156 Otterfing (DE); Mehling, Lucia, Dipl.-Ing., W-8066 Feldgeding (DE)

(56) Entgegenhaltungen:
- EP-A- 0 237 841
- TELCOM REPORT SONDERHEFT - ISDN IM BüRO - HICOM1985, MüNCHEN Seiten 95 - 106; THOMAS ET AL: 'Betriebs-Software des ISDN-Kommunikationssystems HICOM'
- IEEE INTERNATIONAL CONFERENCE ON COMMUNICATIONS Bd. 3, 12. Juni 1988, PHILADELPHIA (US) Seiten 1312 - 1316; RUGHEIMER ET AL: 'Configurable software for advanced telephony applications'
- ELEKTRONIK UND INFORMATIONSTECHNIK Bd. 106, Nr. 11, November 1989, WIEN (AT) Seiten 472 - 485; DANNINGER ET AL: 'Das österreichische Digitale Telefonsystem OES - Die Systemvariante OES-D'
- IEEE INTERNATIONAL CONFERENCE ON COMMUNICATIONS Bd. 2, 14. Mai 1984, AMSTERDAM (NL) Seiten 734 - 737; COHEN ET AL: 'Database Management Strategies to support Network Services'

## Beschreibung

### Digitale Fernmeldevermittlungssysteme dienen zur Verbindung von Fernmeldeendgeräten mit vielfältigen Leistungsmerkmalen untereinander und zur Verbindung dieser Endgeräte mit Kommunikationsnetzen, insbesondere öffentlichen Netzen.

Durch eine von der Firma Siemens herausgegebene Druckschrift (Special Issue of telcom report, and Siemens Magazine COM, "ISDN in the Office", December 1985 Ordering No. A 19100-L523-V849-X-7600, ISBN 3-8009-3849-9) ist ein derartiges Vermittlungssystem bekannt, an das analoge und digitale Telefone, Fernkopierer, multifunktionale Terminals, Arbeitsplatzsysteme, Personal Computer, Teletex- und Bildschirmtextstationen und Endgeräte anschließbar sind. Die Struktur des System ist derart konzipiert, daß neben digitalen Endgeräten also auch der Anschluß herkömmlicher Geräte mit analoger Übertragung möglich ist.

Die Betriebstechnik-Software des bekannten Vermittlungssystems umfaßt bereits Programmodule, die der Sicherung der Datenkonsistenz dienen. Das Sicherstellen der Datenbasiskonsistenz bei Änderung statischer Daten wird dabei durch sogenannte Update-Programmteile und durch besondere Koordinationsmechanismen erreicht, die darin bestehen, die änderbaren statischen Daten in dem aus Funktionsmodulen (Durchschalteeinheit, periphere Funktionsmodule) bestehenden System in einem Arbeitsspeicher des betreffenden Funktionsmoduls und in Hintergrundspeichern parallel abzulegen. Dabei ist weiter vorgesehen, daß geänderte Teile der Datenbasis automatisch in zyklischen Abständen oder manuell durch betriebstechnische Programmodule in der Festplatte aktualisiert werden, während die Update-Prozedur von Stand-by-Rechnern sofort mit dem Ändern des aktiven Rechners erfolgt (Druckschrift Seite 101). Die Sicherung der Datenkonsistenz für ein Kommunikationssystem mit mehreren Datenbasen ist in der Druckschrift jedoch nicht vorgesehen.

Aus der Europäischen Patentanmeldung 0 237 841 ist bereits ein Verfahren zur Bearbeitung von Konfigurationsänderungen einer Datenverarbeitungsanlage und eine Vorrichtung zur Durchführung des Verfahrens bekannt. Dabei werden der Inhalt eines Konfigurationsspeichers und der Inhalt eines oder mehrerer Funktionsmodule in einer starren Abfolge der Änderungsprozeduren geändert. Die Funktionsmodule enthalten jeweils eine Untermenge aller Systemkonfigurationsdaten, während für den Konfigurationsspeicher vorgesehen ist, daß dieser alle Systemkonfigurationsdaten enthält. Aufgrund dieser Struktur kann bei Datenzugriffen im Zuge von Änderungsprozeduren ein relativ großer Rechenaufwand erforderlich werden, wobei sich auch relativ lange Bearbeitungszeiten ergeben können.

In diesem Zusammenhang liegt der Erfindung das Problem zugrunde, die Datenkonsistenz für ein eingangs genanntes Fernmeldevermittlungssystem sicherzustellen, das Funktionsmodule mit unterschiedlichen Anforderungen an die Änderung von Konfigurationsdaten enthält. Dieses Problem wird ausgehend vom Stand der Technik durch die kennzeichnenden Merkmale des Patentanspruchs 1 gelöst.

Das durch die Erfindung geschaffene Konzept zur Sicherung der Datenkonsistenz zeichnet sich durch die Möglichkeit aus, mehrere Datenbasen unterschiedlicher Hierarchiestufen vorzusehen, Datenbasen übergeordneter Hierarchiestufe, das heißt sogenannte Masterdatenbasen, und Datenbasen untergeordneter Hierarchiestufe, das heißt sogenannte Slavedatenbasen oder abhängige Datenbasen. Keine der Datenbasen hat im erfindungsgemäßen System sämtliche Systemkonfigurationsdaten zu enthalten; grundsätzlich sind in den Datenbasen, die jeweils einem Funktionsmodul zugeordnet sind, nur die funktionsmodulrelevanten Daten abgespeichert. Damit wird die Speicherkapazität der Datenbasen besser genutzt und die dezentrale Ablage der Daten erlaubt einen schnelleren Zugriff der Funktionsmodule auf die Daten.

Nach einer weiteren vorteilhaften Ausführungsform der Erfindung ist für jedes Betriebstechnik-Programmodul vorgesehen, daß Tabellen mit einem dritten Datum gepflegt werden, das die Anzahl der tatsächlichen Abläufe jedes Betriebstechnik-Programmoduls angibt. Diese Maßnahme bildet die Grundlage für eine systemweite Überprüfung der Datenbasiskonsistenz im sogenannten Restart-Fall eines Funktionsmoduls.

Erfindungsgemäß ist nach einer weiteren Ausführungsform vorgesehen, daß eine erste Tabelle zusätzlich für jedes Betriebstechnik-Programmodul ein zusätzliches viertes Datum (SOLL) enthält, das die Anzahl der durchzuführenden Abläufe jedes Betriebstechnik-Programmodul angibt. Diese Sollinformation wird bei der Eingabe des betriebtechnischen Kommandos in ein Endgerät in eine erste Tabelle eingeschrieben. Die Steuerung, die die erste Tabelle verwaltet, kann damit den Stand des Programmodul-Ablaufs zu jedem Zeitpunkt erkennen.

Die Erfindung wird nun anhand der Zeichnungen beschrieben.

Es zeigen:
- Fig 1.: eine schematische Darstellung der betriebstechnischen Hardware- und Softwarekomponenten des Fernmeldevermittlungssystems gemäß der Erfindung;
- Fig. 2: Tabellen, auf die Systemrechner bei den Prozeduren zur Sicherung der Datenbasiskonsistenz zugreifen; und
- Fig. 3: ein Flußdiagramm der betriebstechnischen Prozeduren, die mittels des Fernmeldevermittlungssystems nach Figur 1 durchführbar sind.

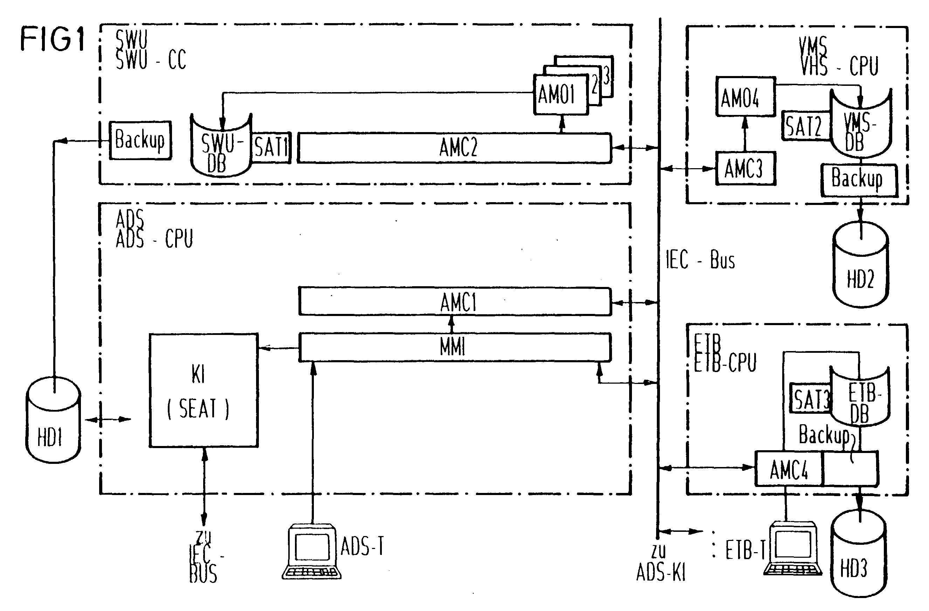

Das in Figur 1 in seiner Betriebstechnikhardware- bzw. -softwarestruktur schematisch dargestellte Fernmeldevermittlungssystem kann grundsätzlich - wie das in den veröffentlichten europäischen Patentanmeldungen EP-A-0 306 693 EP-A-0 303 870 und EP-A-0 303 869 offenbarte System aufgebaut sein.

Der Software-Architektur des bekannten Vermittlungssystems liegen die folgenden Kriterien zugrunde:

Das erste Architektur-Kriterium betrifft die Dreiteilung der Vermittlungs-Software in die Funktionskomplexe Peripherietechnik PP (Peripheral Processing), Leitungstechnik DH (device Handler) und Vermittlungstechnik CP (Call Processing). Dabei nimmt die Peripherietechnik PP die Transportfunktionen war und läuft im wesentlichen auf den Anschlußbaugruppen für die Endgeräte und Leitungen. Die Leitungstechnik DH hat die Aufgabe, die Schnittstelle zu Peripherietechnik PP an die ISDN-Schnittstellen zur Vermittlungstechnik CP anzupassen. Die Vermittlungstechnik CP erbringt die eigentlichen Leistungen für die Benutzeroberflächen der Endgeräte bzw. für die Schnittstellen zu den verschiedenen Sätzen.

Das zweite Architekturkriterium stellt die an Dienste und Endgeräten orientierte Zustands- bzw. Anreizverarbeitung in der Vermittlungstechnik CP dar. Das Dienstekriterium wird als ISDN-Protokollelement der Steuerungs-Software angeboten, die dienstspezifisch aufgrund der mitgelieferten Geräteadresse den Gerätetyp ermittelt.

Das dritte Architekturkriterium zur einfachen Behandlung der Endgeräte- und Dienstevielfalt besteht in der strikten Anwendung der eigenständigen Datenbasis, auf welche die Programme prinzipiell nur auf logischer Ebene zugreifen.

Das in Figur 1 dargestellte Fernmeldevermittlungssystem weist vier Funktionsmodule SWU, ADS, VMS und ETB auf. Das Funktionsmodul SWU stellt eine Durchschalteeinheit dar, die aus einem nicht dargestellten Koppelnetz und aus einem zentralen Rechner SWU-CC besteht, der vorzugsweise durch eine Mehrprozessorsteuerung gebildet ist. Das Funktionsmodul ADS ist eine betriebstechnische Einheit, deren Funktion für das betriebstechnische Zusammenwirken mit den übrigen Funktionsmodulen des Systems in der weiteren Beschreibung erläutert wird. An die beiden vorgenannten Funktionsmodule sind betriebstechnisch über einen IEC-Bus periphere, aufgabenorientierte Funktionsmodule anschließbar, beispielsweise ein Funktionsmodul VMS für die Zwischenspeicherung von Sprachnachrichten sowie ein Funktionsmodul ETB, mit dem ein elektronisches Telefonbuch verwaltet wird. Daneben lassen sich weitere periphere, aufgabenorientierte Funktionsmodule, beispielsweise ein Funktionsmodul für die automatische Verteilung von Anrufen (automatic call disstribution) in das System einbinden, welches wie das Funktionsmodul VMS strukturiert sein kann. Den Funktionsmodulen ADS, SWU und VMS sind Betriebstechnik-Rechnerprogrammodule AMC 1, 2, 3 zugeordnet. Die Module AMC 2 und 3, die den Funktionsmodulen SWU und VMS zugeordnet sind, haben die Aufgabe, die Übermittlung der betriebstechnischen Kommandos zwischen den einzelnen Funktionsmodulen zu steuern und die Programmodule AMO1, AMO2 und AMO3 bzw. AMO4 zu starten. Hierzu werden diese Programmodule aus den entsprechenden Festspeichern HD1 bzw. HD3 in nicht dargestellte funktionsmodulindividuelle Zwischenspeicher geladen. Weiterhin haben die Module AMC die Aufgabe, die zweite Tabelle SAT, die noch beschrieben wird, zu pflegen. Das Modul AMC1 hat im dargestellten Ausführungsbeispiel lediglich die Aufgabe der Kommanoübermittlung, das Modul AMC4, das dem Funktionsmodul ETB zugeordnet ist, hat lediglich die Aufgabe, die zweite Tabelle SAT3 zu pflegen.

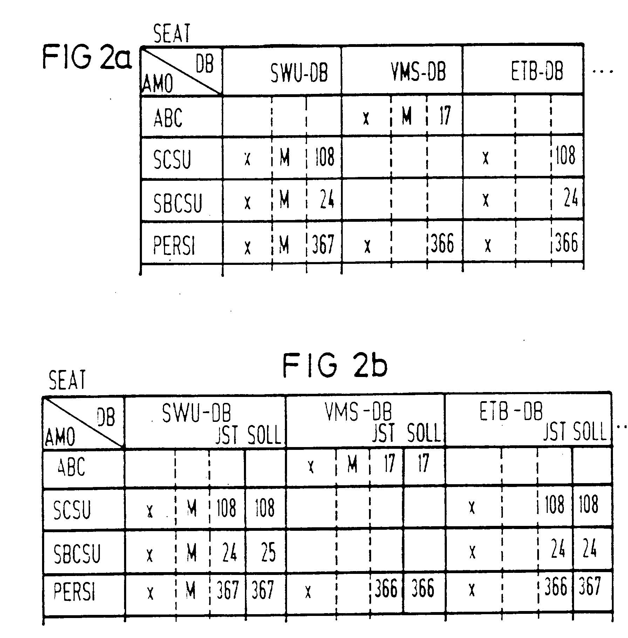

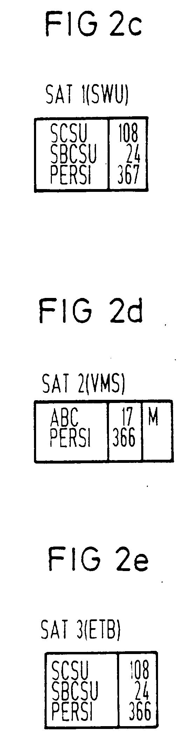

Dem Funktionsmodul SWU sind drei Programmodule AMO1, AMO2 und AMO3 zugeordnet, die in der in Fig. 2 dargestellten Tabelle SEAT mit SCSU, SBCSU und PERSI bezeichnet sind. Diese drei Programmodule ändern Systemdatenkonfigurationssätze, die in der Datenbasis SWU-DB abgespeichert sind, und die wie ebenfalls die Tabelle SEAT zeigt, in der Datenbasis VMS-DB abgespeichert sind. Die Datenbasis SWU-DB ist für AMO1 (=SCSU), AMO2 (=SBCSU) und AMO3 (=PERSI) die sogenannte Masterdatenbasis, also eine Datenbasis übergeordneter Hierarchiestufe, während die Datenbasis VMS-DB für AMO1, AMO2 und AMO3 eine sogenannte abhängige oder Slavedatenbasis ist, das heißt eine Datenbasis untergeordneter Hierarchiestufe. Für AMO4 ist VMS-DB die Masterdatenbasis; die zugehörige abhängige Datenbasis ist nicht dargestellt.

Die Datenbasis des Funktionsmoduls ETB hat bezüglich keiner Systemkonfigurationsdatensätze den Status einer Masterdatenbasis, so daß auch dem Funktionsmodul ETB kein Programmodul AMO zugeordnet ist.

Die Funktionsmodule SWU, VMS, ETB verfügen über je eine schon erwähnte eigenständige Datenbasis SWU-DB, VMS-DB und ETB-DB. Es wird davon ausgegangen, daß mindestens ein Teil der Datensätze von Systemkonfigurationsdaten in mehr als einer der genannten Datenbasen abgespeichert ist. Die weitere Beschreibung bezieht sich auf diese Datensätze, soweit nicht andere Eigenschaften der Datensätze genannt werden. Zur Sicherstellung der für einen ordnungsgemäßen Systembetrieb erforderlichen Datenkonsistenz sind Datensätze, die den gleichen Sachverhalt beispielsweise Rufnummer und Name eines Teilnehmers, in jeder betroffenen Datenbasis zu ändern (siehe das der Personenidentifizierung dienende AMO "PERSI" in Figur 2). Zur Sicherung der in den Datenbasen abgespeicherten Datensätzen und Tabellen (SEAT, SAT1 ... SATx) sind unter anderem jeweils eine für sich bekannte " Backup"-Funktion und Hintergrundspeicher HD1, HD2, HD3 (Harddisk HD) vorgesehen.

Die betriebstechnische Einheit ADS ist mit einem betriebstechnischen Endgerät ADS-T verbindbar. Dieses dient der Eingabe von betriebstechnischen Kommandos AMO-KDO. Das betriebstechnische Endgerät ADS-T steht mit einer Einheit MMI (Mensch-Maschine-Interpreter) in Verbindung, die durch ein Textprozessor-Programmodul gebildet ist, das zur Umsetzung von Kommandoinformationen - z.B. nach der CCITT-Man-Machine-Language - in applikationsgerechte Dateninformationen dient. Weitere Teilaufgaben des Textprozessor-Programmoduls MMI sind die Syntaxüberprüfung, die Analyse von Kommandos entsprechend Parameternbaumdefinitionen-Parsing-, die Durchführung von Parametereinzelprüfungen gegen applikationsbezogene Datentabellen und die Aufbereitung von Ausgabetexten.

Jedes Kommando, das in das Endgerät ADS-T oder in ein gegebenenfalls weiteres Endgerät ETB-T eingebbar ist, besteht aus drei Teilen; aus einer Bezeichnung des betriebstechnischen Auftrags AMO1, AMO2, AMO3 oder AMO4, aus einer Bezeichnung der vorzunehmenden Aktion wie beispielsweise "Ändern", "Löschen", "Abfragen" und aus Parameterdaten wie beispielsweise eine Teilnehmerrufnummer, die den jeweiligen betriebstechnischen Auftrag und die Aktion spezifizieren. Kommandos, die sich auf eine Abfrage beschränken und nicht zu einer Änderung von Systemkonfigurationsdatensätzen führen, werden hier nicht betrachtet.

Die Einheit MMI steht mit einer Einheit KI in Verbindung, die ihrerseits mit dem Hintergrundspeicher HD1 und mit dem die Funktionsmodule verbindenden IEC-Bus verbunden ist. In der Steuerung ADS-CPU ist eine Einheit KI aktiv, die die eigentliche Aufgabe erfüllt, die Datenkonsistenz aller Systemdatenbasen zu erhalten, wobei sie die Tabelle SEAT verwendet.

In den Datenbasen des Systems sind unter anderem mehrfach Systemkonfigurationsdatensätze abgespeichert, die systemweit konsistent zu halten sind. So ist beispielsweise eine Rufnummer 123 und der zugehörige Name "Mr. X" eines Teilnehmers sowohl in der Datenbasis SWU-DB als auch in der Datenbasis ETB-DB abgespeichert. Ändert sich der betreffende Name bzw. die Zuordnung von Rufnummer und Name, so ist der entsprechende Datensatz in beiden zuvor genannten Datenbasen in gleicher Weise zu ändern.

Das in Figur 1 dargestellte System ist derart ausgestattet, daß zwei betriebstechnische Endgeräte ADS-T und ETB-T an die betriebstechnische Einheit ADS bzw. an das periphere Funktionsmodul ETB anschließbar sind. In diese Endgeräte sind betriebstechnische Aufträge eingebbar, die unter Verwendung der dem jeweiligen Funktionsmodul zugeordneten Programmodul AMO durchgeführt werden.

Das in Figur 1 dargestellte Fernmeldevermittlungssystem weist mehrere Systemrechner auf, wobei der Durchschalteeinheit SWU ein zentraler Systemrechner SWU-CC zugeordnet ist und den Funktionsmodulen ADS, VMS und ETB ein oder mehrere dezentrale Rechner ADS-CPU, VMS-CPU, ETB-CPU zugeordnet sind. Jedoch kann ein erfindungsgemäßes Fernmeldevermittlungssystem auch lediglich einen Rechner aufweisen, der dann alle im System anfallenden betriebstechnischen Aufgaben erfüllt; es ist also rechnerunabhängig.

Die Einheit K1 umfaßt eine Tabelle SEAT (Surveillance Entity AMO-Table), die die Zuordnung aller im System vorhandener Programmodule (AMO1, ..., AMOn) zu den jeweiligen funktionsmodulindividuellen Datenbasen SWU-DB, VMS-DB und ETB-DB angibt.

Beispiele für eine derartige Tabelle SEAT sind in den Figuren 2a und 2b dargestellt. In der ersten Spalte sind Programmodule AMO aufgelistet, während in den jeweils aus drei bzw. vier Spalten bestehenden Blöcken, die jeweils einer Funktionsmoduldatenbasis SWU-DB, VMS-DB, ETB-DB, ... zugeordnet sind, Zuordnungsdaten angegeben sind. Im dargestellten Beispiel sind die Programmmodule AMO mit SCSU, SBCSU und PERSI bezeichnet. Das Programmmodul SCSU (Suscriber Configuration Switching Unit) dient den Speichereinträgen, die für die Teilnehmerkonfiguration notwendig sind, das Programmodul SBCSU (Suscriber Bus Configuration Unit) dient den Speichereinträgen, die für die Konfiguration von Teilnehmern am So-Bus notwendig sind und das Programmodul PERSI (Personenidentifikation) dient den Speichereinträgen von personenbezogenen Daten (z.B Name eines Teilnehmers). Das weitere in der Tabelle SEAT aufgelistete Programmmodul ABC ist ein Programmodul, das beispielsweise der Konfigurierung von Sprachpostfächern (voice mail boxes) dient.

Den Funktionsmodulen SWU, VMS und ETB sind individuelle Datenbasen SWU-DB, VMS-DB und ETB-DB zugeordnet, die sich in ihrer Hierarchie unterscheiden. Wie noch beschrieben wird, ist für jedes Programmodul AMO eine sogenannte Masterdatenbasis und wenigstens eine hierarchisch untergeordnete, abhängige Datenbasis vorgesehen.

"x" bedeutet, daß das jeweilige Programmmodul AMO bzw. ein von dem betreffenden Programmodul zu ändernder Systemkonfigurationsdatensatz der jeweiligen funktionsmodulindividuellen Datenbasis zugeordnet ist. Die Information "M", die in der zweiten Blockspalte auftreten kann, gibt an, daß die Datenbasis des jeweiligen Funktionsmoduls für das betreffende Programmodul, bzw. den betreffenden Systemkonfigurationsdatensatz die sogenannte Masterdatenbasis ist. Die Information "M" muß genau einmal pro Zeile in der Tabelle SEAT auftreten.

Masterdatenbasis bezeichnet diejenige Datenbasis, die bei Änderung eines Systemkonfigurationsdatensatzes in einen ersten Änderungsschritt einbezogen wird, während weitere Datenbasen von Funktionsmodulen, die mangels einer Information "M" in der in Figur 2a dargestellten Tabelle für den durch das betreffende Programmodul AMO zu ändernden Systemkonfigurationsdatensatz eine abhängige Datenbasis darstellt, die bei der Bearbeitung von betriebstechnischen Aufträgen erst in einem zweiten oder einem folgenden Änderungsschritt in den Änderungsprozeß einbezogen werden.

Die jeweils dritte Spalte in einem Block enthält ein zusätzliches drittes Datum "IST", das die Anzahl der tatsächlichen Abläufe des betreffenden Programmoduls AMO angibt.

Beispielsweise ist dem Programmodul AMO bzw. dem betreffenden Systemkonfigurationsdatensatz SCSU die Ablaufzahlinformation 108 zugeordnet und zwar für die Datenbasen des Funktionsmoduls SWU und des peripheren Funktionsmoduls ETB. Dagegen weist das Programmodul PERSI für die Funktionsmoduldatenbasis SWU-DB die Ablaufzahlinformation 367 auf, während die entsprechende Versioninformation für die peripheren Funktionsmodule VMS und ETB 366 lautet.

Diese unterschiedlichen Ablaufzahlinformationen deuten darauf hin, daß der im Zusammenhang mit dem Programmodul PERSI stehende Systemkonfigurationsdatensatz in den Datenbasen der Funktionsmodule VMS und ETB zu ändern sind; zu dem in der Tabelle SEAT dargestellten Zeitpunkt ist der Systemkonfigurationsdatensatz PERSI systemweit nicht datenkonsistent.

Wie die Eintragungen "M" in Figur 2a zeigen, ist die Datenbasis SWU-DB die Masterdatenbasis für die im Zusammenhang mit den Programmodulen SCSU, SBCSU und PERSI stehenden Systemkonfigurationsdatensätze, während die Datenbasen der übrigen Funktionsmodule VMS-DB und ETB-DB für die drei zuvor genannten Systemkonfigurationsdatensätze abhängige Datenbasen sind. Für den im Zusammenhang mit dem Programmodul ABC stehenden Systemkonfigurationsdatensatz ist die Datenbasis des Funktionsmoduls VMS die Masterdatenbasis.

Die in Figur 2b dargestellte Tabelle SEAT enthält für jede Datenbasis eine vierte Blockspalte, die für jedes Betriebstechnik-Programmodul AMO ein viertes Datum "SOLL" enthält, das die Soll-Anzahl der durchzuführenden Abläufe eines jeden Programmmoduls angibt.

Den Datenbasen SWU-DB, VMS-DB und ETB-DB sind die in den Figuren 2c, 2d und 2e dargestellten Tabellen SAT1, SAT2 und SAT3 zugeordnet. Diese Tabellen geben an, welche Programmodule AMO Systemkonfigurationsdatensätze in der Datenbasis des betreffenden Funktionsmoduls zugleich Datensätze in der Masterdatenbasis (im vorliegenden Fall SWU-DB) ändern. Dem peripheren Funktionsmodul SWU sind die Programmodule SCSU, SBCSU und PERSI zugeordnet. Diese Informationen sind durch eine Ablaufzahlinformation ergänzt, die die Anzahl der Änderungen in der jeweiligen funktionsindividuellen Datenbasis angibt.

Die in Figur 2d dargestellte Tabelle, die der Datenbasis VMS-DB zugeordnet ist, ist neben der Ablaufzahlinformation in der zweiten Spalte um eine Information "M" in der dritten Spalte ergänzt, die angibt, daß für das in der ersten Zeile aufgelistete Programmodul ABC bzw. den betreffenden Systemkonfigurationsdatensatz die Datenbasis VMS-DB des Funktionsmoduls VMS die Masterdatenbasis ist. Fehlt in den Tabellen SAT1 ... SATx eine entsprechende Eintragung "M", so ist für das betreffende Programmmodul (SCSU, SBCSU, PERSI) die Datenbasis SWU-DB die Masterdatenbasis.

Die zweiten Tabellen SAT1 ... SAT3 werden programmtechnisch aus den in den jeweiligen Datenbasen SWU-DB, VMS-DB und ETB-DB abgespeicherten Systemkonfigurationsdatensätze abgeleitet und jeweils auf den zugehörigen Hintergrundspeichern HD1, HD2 und HD3 abgelegt. Bei jedem Hochlauf der Funktionsmodule SWU, VMS und ETB wird der Inhalt der Tabellen SATx der Einheit K1 übermittelt, die aus dem übermittelten Informationen die Tabelle SEAT bildet.

Die in Figur 2b dargestellte Tabelle SEAT zeigt für die im Zusammenhang mit den Programmodulen ABC und SCSU stehenden Datensätze übereinstimmende Soll- und Ist-Ablaufzahlinformationen, so daß von der Datenkonsistenz der in den entsprechenden Datenbasen abgespeicherten Konfigurationsdatensätzen auszugehen ist.

Für den durch das Programmodul SBCSU zu ändernden Konfigurationsdatensatz ist aus der Tabelle SEAT in Figur 2b abzuleiten, daß die Masterdatenbasis SWU-DB durch das in ein betriebstechnisches Endgerät (ADS-T, ETB-T) eingegebene Kommando von der auszuführenden Datensatzänderung informiert worden ist (Sollablaufzahlinformation = 25). Die Datensatzänderung wurde in der Masterdatenbasis SWU-DB jedoch (noch) nicht durchgeführt (Istablaufzahlinformation = 24). Der abhängigen Datenbasis ETB-DB ist die durchzuführende Änderung nicht mitgeteilt worden und die Änderung ist nicht durchgeführt worden (Soll- und Ist-ablaufzahlinformation ist je 24).

Für den durch das Programmodul PERSI zu ändernden Konfigurationsdatensatz ist aus der Tabelle SEAT in Figur 2b abzuleiten, daß in der Masterdatenbasis SWU-DB die durchzuführende Änderung durchgeführt worden ist. Die erste abhängige Datenbasis ETB-DB ist über die durchzuführende Änderung informiert worden; die Änderung ist jedoch nicht durchgeführt worden. Der zweiten abhängigen Datenbasis VMS-DB ist die durchzuführende Änderung nicht mitgeteilt worden und die Änderung ist nicht durchgeführt worden.

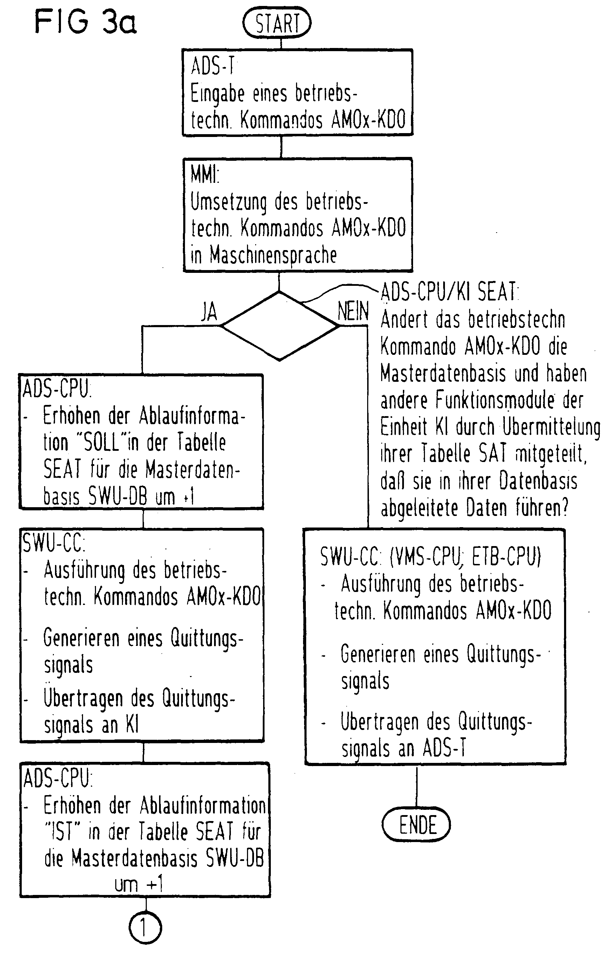

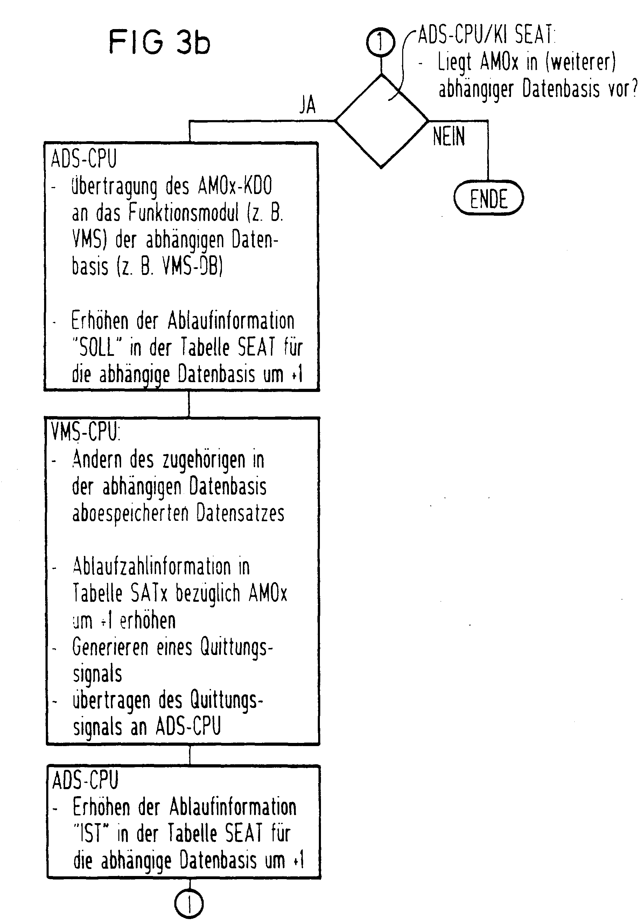

Im folgenden wird die Bearbeitung eines betriebstechnischen Auftrags anhand des in Figur 3 dargestellten Flußdiagramms beschrieben.

In das betriebstechnische Endgerät ADS-T der Einheit ADS wird ein betriebstechnisches Kommando AMO1-KDO1 eingegeben, das wie schon oben ausgeführt aus drei Bestandteilen besteht und zu der Änderung oder Löschung eines Systemkonfigurationsdatensatzes führen soll. Der Auftrag wird der Einheit MMI zugeführt, die die Eingabesignale in an sich bekannter Weise in applikationsgerechte Dateninformationen umsetzt. Die Steuerung ADS-CPU der betriebstechnischen Einheit ADS greift auf die Einheit KI zu und ermittelt anhand der dort abgespeicherten Tabelle SEAT, ob der in dem Kommando angegebene betriebstechnische Auftrag AMO und die ebenfalls angegebene Aktion eine Änderung der Masterdatenbasis bewirkt, für die andere Funktionsmodule über deren Tabellen SAT ein Interesse an den Daten mitgeteilt haben.

Wird bei dem in Figur 2a oder 2b dargestellten Beispiel ein Kommando eingegeben, das eines der vier aufgeführten Programmmodule ABC, SCSU, SBCSU und PERSI betrifft, so führt die Überprüfung zu einem positiven Ergebnis. Damit ist die Masterdatenbasis VMS-DB (für ABC) bzw. die Masterdatenbasis SWU-DB (für SCSU, SBCSU und PERSI) zu ändern.

Es wird nun davon ausgegangen, daß die Datenbasis SWU-DB der Durchschalteeinheit durch den angegebenen betriebstechnischen Auftrag zu ändern ist. Zunächst wird in der Tabelle SEAT für die Masterdatenbasis SWU-DB die Sollablaufzahlinformation um +1 erhöht. Das Kommando wird nun über den IEC-Bus dem Funktionsmodul SWU zugeführt und dort mit dem entsprechenden AMO bearbeitet. Im Ergebnis wird der geänderte Systemkonfigurationsdatensatz in die Datenbasis SWU-DB eingespeichert. Das jeweilige Programmodul AMO quittiert die ordnungsgemäße Bearbeitung des entsprechenden betriebstechnischen Auftrags AMO, und führt diese Quittung über den IEC-Bus der Einheit KI und dem Eingabeterminal ADS-T zu. Die Einheit erhöht die entsprechende Ablaufzahlinformation "IST" um +1. Im Anschluß daran wird die Tabelle SEAT darauf abgefragt, ob der entsprechende Systemkonfigurationsdatensatz in einer weiteren, d.h. abhängigen Datenbasis des Systems zu ändern ist.

Dies ist hier für die Datenbasis VMS-DB der Fall. Das entsprechende Kommando AMO-KDO1 wird unverändert über den IEC-Bus dem Funktionsmodul VMS zugeführt und dort in analoger Weise bearbeitet. Nach erfolgreichem Abschluß dieses zweiten Änderungsschrittes wird die Ablaufzahlinformation in der Tabelle SAT des Funktionsmoduls VMS ebenfalls um +1 erhöht. Die Steuerung VMS-CPU bildet ebenfalls ein Quittungssignal und führt dieses über den ICB-Bus der Einheit KI zu, in der die Tabelle SEAT hinsichtlich der Ablaufzahlinformation aktualisiert wird.

Betriebstechnische Aufträge können auch in das Endgerät ETB-T eingegeben werden. Betrifft dieser Auftrag beispielsweise das Programmodul bzw. einen Systemkonfigurationsdatensatz PERSI, so wird dieser Auftrag über den IEC-Bus der Einheit MMI und KI zugeführt. Die weitere Bearbeitung erfolgt wie anhand des Flußdiagramms dargestellt wurde. Für das Programmodul PERSI ist, wie die Figuren 2a bis 2e zeigen, die Datenbasis des Funktionsmoduls SWU die Masterdatenbasis, so daß der erste Änderungsschritt hinsichtlich des in der Datenbasis SWU-DB abgespeicherten Datensatzes durchgeführt wird, während die Datenbasen der Funktionsmodule VMS und ETB in einem zweiten bzw. dritten Änderungsschritt aktualisiert werden.

Aus der vorstehenden Beschreibung ergibt sich, daß die zweiten Tabellen SATx programmtechnisch aus den in den zugehörigen Datenbasen abgespeicherten Systemkonfigurationsdatensätzen abgeleitet werden. Bei jedem Hochlauf der zugehörigen Funktionsmodule wird der Inhalt dieser Tabellen SATx einer Einheit KI übermittelt, die aus den übermittelten Informationen die Tabelle SEAT bildet. Bei der Eingabe eines betriebstechnischen Kommandos kann zunächst in der Tabelle SEAT für den Systemkonfigurationsdatensatz, der im Zusammenhang mit dem im Kommando angegebenen betriebstechnischen Auftrag AMO steht, eine SOLL-Ablaufzahlinformation um +1 erhöht werden. In der Folge wird der in der Masterdatenbasis abgespeicherte Systemkonfigurationsdatensatz geändert, was die Bildung eines Quittungssignals auslöst. Dieses wird der Einheit KI zugeführt, die die entsprechende IST-Ablaufzahlinformation um +1 erhöht. In der Folge wird die entsprechende abhängige Datenbasis bzw. die entsprechenden Ablaufzahlinformationen in gleicher Weise behandelt.

Das betriebstechnische Kommando wird nach der Änderung des Systemkonfigurationsdatensatzes in der Masterdatenbasis unverändert der oder den abhängigen Datenbasen übermittelt. Dabei extrahiert die jeweilige abhängige Datenbasis aus den in dem betriebstechnischen Kommando enthaltenen Parameterdaten nur eine jeweils interessierende Datenuntermenge.

## Patentansprüche

1. Digitales Fernmeldevermittlungssystem zur Verbindung von Endgeräten untereinander,
- das folgende Funktionsmodule aufweist
- eine Durchschalteeinheit (SWU),
- eine an die Durchschalteeinheit (SWU) anschaltbare betriebstechnische Einheit (ADS), in die über ein betriebstechnisches Endgerät (ADS-T) betriebstechnische Aufträge (AMO1-KDO1, ..., AMO1-KDOi;...; AMOn-KDO1, ..., AMO-KDOj) eingebbar sind,
- wenigstens ein peripheres aufgabenorientiertes Funktionsmodul (VMS, ETB),
- mit einem zentralen Systemrechner (SWU-CC) und gegebenenfalls dezentralen Systemrechnern (ADS-CPU, VMS-CPU, ETB-CPU),
- mit einem Systembetriebstechnik-Rechnerprogramm, das Programmodule (AMO1, ... AMOn) zur jeweils eigenständigen Bearbeitung der betriebstechnischen Aufträge (AMO1-KDO1, ... AMO1-KDOi; ...; AMOn-KDO1, ..., AMOn-KDOj) umfaßt,
- mit einer der Durchschalteeinheit (SWU) zugeordneten Datenbasis (SWU-DB) und mit wenigstens einer weiteren funktionsmodulindividuellen Datenbasis (VMS-DB, ETB-DB), wobei den Datenbasen (SWU-DB, VMS-DB, ETB-DB) unterschiedliche Hierarchiestufen in der Weise zugeordnet sind, daß bei Änderungg von in mindestens zwei Datenbasen (SWU-DB, VMS-DB, ETB-DB) abgespeicherten, systemweit datenkonsistent zu haltenden Systemkonfigurationsdatensätzen in einem ersten Änderungsschritt der jeweilige Systemkonfigurationsdatensatz in der Datenbasis übergeordneter Hierarchiestufe und in einem zweiten und gegebenenfalls folgenden Änderungsschritten der Systemkonfigurationsdatensatz in einer und gegebenenfalls weiteren Datenbasen untergeordneter Hierarchiestufe geändert wird,
**dadurch gekennzeichnet,**
daß das System eine erste Tabelle (SEAT) mit Zuordnungsdaten enthält, die die Zuordnung zwischen den funktionsmodulindividuellen Datenbasen (SWU-DB, VMS-DB, ETB-DB) und Betriebstechnik-Programmodulen (AMO1, ... AMOn) angeben, die in unterschiedlichen funktionsmodulindividuellen Datenbasen (SWU-DB, VMS-DB, ETB-DB) abgespeicherte jeweils konsistent zu haltende Systemkonfigurationsdatensätze verändern,
daß das System funktionsmodulindividuelle, zweite Tabellen (SAT1, ... SATx) mit Daten enthält, die die BetriebstechnikProgrammodule (AMO1, ... AMOn) angeben, die Systemkonfigurationsdatensätze in dem jeweiligen Funktionsmodul (SWU-DB, VMS-DB, ETB-DB) und in wenigstens einer weiteren funktionsmodulindividuellen Datenbasis zur Sicherung der Datenkonsistenz ändern, und
daß die erste und die zweiten Tabellen (SEAT, SAT1, ... SATx) zusätzlich für jedes Betriebstechnik-Programmodul (AMO1 ...AMOn) ein zusätzliches erstes Datum (M) enthält, das eine Datenbasis übergeordneter Hierarchiestufe gegenüber einer oder mehrerer Datenbasen untergeordneter Hierarchiestufen angibt.

2. Digitales Fernmeldevermittlungssystem nach Anspruch 1,
**dadurch gekennzeichnet,**
daß die erste und die zweiten Tabellen (SEAT, SAT1, ... SATn) zusätzlich für jedes Betriebstechnik-Programmodul (AMO1 ... AMOn) ein zusätzliches drittes Datum (IST) enthalten, das die Anzahl der tatsächlichen Abläufe jedes Betriebstechnik-Programmoduls (AMO1 ... AMOn) angibt.

3. Digitales Fernmeldevermittlungsystem nach Anspruch 2,
**dadurch gekennzeichnet,**
daß die erste Tabelle (SEAT) zusätzlich für jedes Betriebstechnik-Programmodul (AMO1 ... AMOn) ein zusätzliches viertes Datum (SOLL) enthält, das die Anzahl der durchzuführenden Abläufe eines jeden Betriebstechnik-Programmoduls (AMO1 ... AMOn) angibt.

4. Digitales Fernmeldevermittlungssystem nach einem der vorhergehenden Ansprüche,
**dadurch gekennzeichnet,**
daß das Systembetriebstechnik-Programm in der Weise ausgestaltet ist, daß bei einem Hochlauf eines Funktionsmoduls (SWU, VMS, ETB) der Inhalt der jeweiligen zweiten Tabelle (SAT1, ... SATx) in die erste Tabelle (SEAT) eingeschrieben wird.

## Claims

1. Digital telecommunications exchange system for connecting terminals to one another,
- which has the following function modules:
- a switching unit (SWU),
- an administration and maintenance unit (ADS) which can be connected to the switching unit (SWU) and into which administration and maintenance orders (AMO1-KDO1, ..., ANO1-KDOi; ...; AMOn-KDO1, ..., AMO-KDOj) can be input via an administration and maintenance terminal (ADS-T),
- at least one peripheral task-oriented function module (VMS, ETB),
- with a central system computer (SWU-CC) and if required decentralized system computers (ADS-CPU, VMS-CPU, ETB-CPU),
- with a system administration and maintenance computer program comprising program modules (AmO1, ... AMOn) for the independent processing of the administration and maintenance orders (AmO1-KDO1, ... AMO1-KDOi; ...; AMOn-KDO1, ..., AMOn-KDOj) in each case,
- with a database (SWU-DB) assigned to the switching unit (SWU) and with at least one further function-module-specific database (VMS-DB, ETB-DB), with different hierarchical levels being assigned to the databases (SWU-DB, VMS-DB, ETB-DB) in such a way that when system configuration data records that are stored in at least two databases (SWU-DB, VMS-DB, ETB-DB) and are to be maintained with system-wide data consistency are updated, the respective system configuration data record in the database of the higher-ranking hierarchical level is updated in a first updating step and the system configuration data record in one and any further databases of the lower-ranking hierarchical level is updated in a second and any following updating steps,
characterized in that
the system contains a first table (SEAT) with assignment data specifying the assignment between the function-module-specific databases (SWU-DB, VMS-DB, ETB-DB) and administration and maintenance program modules (AMO1, ... AMOn) which change the system configuration data records that are stored in different function-module-specific databases (SWU-DB, VMS-DB, ETB-DB) and are to be maintained consistently in each case,
in that the system contains function-module-specific, second tables (SAT1, ... SATx) with data which specify the administration and maintenance program modules (AMO1, ... AMOn) that update the system configuration data records in the respective function module (SWU-DB, VMS-DB, ETB-DB) and in at least one further function-module-specific database for protecting the consistency of the data,
and in that the first and the second tables (SEAT, SAT1, ... SATx) additionally contain an additional first data item (M) for each administration and maintenance program module (AMO1 ... AMon) which indicates a database of a higher-ranking hierarchical level as against one or more databases of lower-ranking hierarchical levels.

2. Digital telecommunications exchange system according to Claim 1, characterized in that the first and the second tables (SEAT, SAT1, ... SATn) additionally contain an additional third data item (IST) for each administration and maintenance program module (AMO1 ... AMOn) which indicates the actual number of times each administration and maintenance program module (AmO1 ... AMOn) has been executed.

3. Digital telecommunications exchange system according to Claim 2, characterized in that the first table (SEAT) additionally contains an additional fourth data item (SOLL) for each administration and maintenance program module (AMO1 ... AMOn) which indicates the number of times each and every administration and maintenance program module (AMO1 ... AMOn) is to be executed.

4. Digital telecommunications exchange system according to one of the preceding claims, characterized in that the system administration and maintenance program is designed in such a way that the contents of the respective second table (SAT1, ... SATx) are written into the first table (SEAT) when a function module (SWU, VMS, ETB) is started up.

## Revendications

1. Système numérique de commutation de télécommunications servant à relier des terminaux entre eux et qui
- comporte des modules fonctionnels suivants,
- une unité d'interconnexion (SWU),
- une unité technique de service (ADS), qui peut être raccordée à l'unité d'interconnexion (SWU) et dans laquelle des ordres techniques de service (AMO1-KDO1; ...; AMO1-KDOi; ...; AMOn-KDO1, ..., AMO-KDOj) peuvent être introduits par l'intermédiaire d'un terminal technique de service (ADS-T),
- au moins un module fonctionnel périphérique (VMS,ETB) axé sur des tâches,
- un calculateur central (SWU-CC) du système et éventuellement des calculateurs décentralisés (ADS-CPU, WMS-CPU, ETB-CPU) du système,
- un programme de calcul de la technique de service du système, qui comporte des modules de programme (AMO1,... AMOn) pour le traitement respectivement indépendant des ordres techniques de service (AMO1-KDO1, ...; AMOn-KDOi, AMOn-KDO1 ..., AMOn-KDOj),
- une base de données (SWU-DB) associée à l'unité d'interconnexion (SWU) et comportant au moins une autre base de données (VMS-DB, ETB-DB) prévue pour chaque module fonctionnel, des niveaux hiérarchiques différents étant associés aux bases de données (SWU-DB, VMS-DB, ETB-DB) de telle sorte que, dans le cas d'une modification d'ensemble de données de la configuration du système, qui sont mémorisées dans au moins deux bases de données (SWU-DB, VMS-DB, ETB-DB) et qui doivent être maintenues compatibles du point de vue des données dans l'ensemble du système, l'ensemble de données de la configuration du système dans la base de données possédant un niveau hiérarchique supérieur, est modifié lors d'une première étape de modification, et l'ensemble de données de la configuration du système dans une et éventuellement d'autres bases de données possédant un niveau hiérarchique inférieur, est modifié lors une seconde étape de modification et éventuellement lors d'étapes suivantes de modification,
caractérisé par le fait
que le système possède une première table (ou tableau) (SEAT) comportant des données d'association qui indiquent l'association entre les bases de données (SWU-DB, VMS-DB, ETB-DB), qui sont prévus pour chaque module fonctionnel, et des modules de programme technique de service (AMO1,...AMOn), qui modifient des ensembles de données de la configuration du système qui sont mémorisés dans différentes bases de données (SWU-DB, VMS-DB, ETB-DB), qui sont prévues pour les différents modules fonctionnels et doivent être maintenues respectivement compatibles,
que le système possède des seconds tableaux (SAT1,... SATx), qui sont prévus individuellement pour les modules fonctionnels et qui comportent des données qui indiquent les modules de programme technique de service (AMO1, ... AMOn), qui modifient les ensembles de données de la configuration du système dans le module respectif de fonctionnement (SWU-DB, VMS-DB, ETB-DB) et dans au moins une autre base de données prévue individuellement dans chaque module fonctionnel, pour protéger la cohérence des données, et
que le premier tableau et les seconds tableaux (SEAT, SAT1, ..., SATx) contiennent en outre, pour chaque module de programme technique de service (AMO1...AMOn), une première donnée supplémentaire (M), qui indique une base de données d'un niveau hiérarchique supérieur, par rapport à une ou plusieurs bases de données ayant des niveaux hiérarchiques inférieurs.

2. Système de communication numérique de télécommunications suivant la revendication 1, caractérisé par le fait que le premier tableau et les seconds tableaux (SEAT, SAT1, ... SATn) contiennent, en supplément, et pour chaque module de programme technique de service (AMO1...AMOn), une troisième donnée supplémentaire (IST) qui indique le nombre des exécutions effectives de chaque module de programme technique de service (AMO1...AMOn).

3. Système de communication numérique de télécommunications suivant la revendication 2, caractérisé par le fait que le premier tableau (SEAT) indique, en supplément, et pour chaque module de programme technique de service (AMO1...AMOn), une quatrième donnée supplémentaire (SOLL), qui indique le nombre des exécutions devant être effectuées de chaque module de programme technique de service (AMO1...AMOn).

4. Système de communication numérique de télécommunications suivant l'une des revendications précédentes, caractérisé par le fait que le programme technique de service du système est conçu de telle sorte que, dans le cas d'un fonctionnement à régime élevé d'un module fonctionnel (SWU, VMS, ETB), le contenu du second tableau (SAT1, ... SATx) est inscrit dans le premier tableau (SEAT).
